# EUROPÄISCHE PATENTSCHRIFT

(11) **EP 2 785 987 B1**
(45) Veröffentlichungstag und Bekanntmachung des Hinweises auf die Patenterteilung: **08.03.2017**
(21) Anmeldenummer: 11788877.6
(22) Anmeldetag: 01.12.2011
(51) Int. Cl.: F01N 3/08, F01N 13/02

(54) **VERFAHREN ZUM BETREIBEN VON ABGASREINIGUNGSANLAGEN**
METHOD FOR OPERATING EXHAUST GAS PURIFICATION SYSTEMS
PROCÉDÉ POUR FAIRE FONCTIONNER DES INSTALLATIONS D'ÉPURATION DES GAZ D'ÉCHAPPEMENT

(43) Veröffentlichungstag der Anmeldung: 08.10.2014
(73) Patentinhaber: Umicore AG & Co. KG, 63457 Hanau (DE)
(72) Erfinder: ECKHOFF, Stefan, 63755 Alzenau (DE)
(86) Internationale Anmeldenummer: PCT/EP2011/071546
(87) Internationale Veröffentlichungsnummer: WO 2013/079117

(56) Entgegenhaltungen:
- EP-A2- 0 433 772
- EP-A2- 0 957 254
- DE-A1- 1 451 881
- DE-A1- 19 822 798
- DE-A1-102010 014 468
- US-A1- 2005 132 696

## Beschreibung

Die vorliegende Erfindung ist auf ein Verfahren zur Abgasreinigung bei Fahrzeugen mit Verbrennungsmotoren gerichtet. Das Verfahren zeichnet sich dadurch aus, dass vom Motor kommendes Abgas dann an einem oder mehreren motornahen Katalysatoren vorbeigeleitet wird, wenn der Verbrennungsmotor des Fahrzeugs keine positive Arbeit leistet oder wenn das Abgas eine Temperatur von 600°C überschreitet.

Die im Abgas eines Kraftfahrzeugs enthaltenen Emissionen können in drei Gruppen unterschieden werden. So bezeichnet der Begriff Primäremission Schadgase, die durch den Verbrennungsprozess des Kraftstoffes im Motor direkt entstehen und im so genannten Rohabgas am Zylinderaustritt vorhanden sind. Das Rohabgas von Magermotoren (Diesel, Lean GDI u.a. mit Schichtladebetrieb) enthält neben den üblichen Primäremissionen Kohlenmonoxid (CO), Kohlenwasserstoffe (HC) und Stickoxide (NOₓ) einen relativ hohen Sauerstoffgehalt von bis zu 15 Vol.-%. Außerdem können noch Partikelemissionen hinzukommen, die überwiegend aus Rußrückständen und gegebenenfalls organischen Agglomeraten bestehen und aus einer partiell unvollständigen Kraftstoffverbrennung im Zylinder herrühren.

Ein Magermotor ist ein Verbrennungsmotor, dessen Luft/Kraftstoff-Gemisch im mageren Bereich gehalten wird, insbesondere ein Dieselmotor oder ein mager betriebener Ottomotoren mit Benzindirekteinspritzung (Lean GDI) und Schichtladebetrieb. Mager bedeutet - wie oben schon angedeutet, dass mehr Verbrennungsluft vorhanden ist, als für die stöchiometrische Verbrennung des Kraftstoffes im Zylinder benötigt wird. Der Luftüberschuss führt dazu, dass die Verbrennungstemperatur und auf diese Weise die Konzentration von Stickoxiden im Abgas reduziert wird. Das Verbrennungsluftverhältnis A (Lambda) ist eine Zahl, mit der die Gemischzusammensetzung bestehend aus Luft und Kraftstoff beschrieben wird. Das Verbrennungsluftverhältnis setzt die tatsächlich für eine Verbrennung zur Verfügung stehende Luftmasse ins Verhältnis zur mindestens notwendigen stöchiometrischen Luftmasse, die für eine vollständige Verbrennung benötigt wird. Magermotoren nennt man Motoren, die zeitweise oder überwiegend im λ-Bereich > 1 betrieben werden. Insbesondere der Dieselmotor ist ein klassisches Magerkonzept, der mit einem Luftüberschuss (1,3 < λ < 2,2) betrieben wird.

Herkömmliche Ottomotoren werden bei einem Luftverhältnis um λ = 1 betrieben. Eine Lambdasonde vor dem Katalysator misst den Sauerstoffgehalt im Abgas und gibt Signale zur Steuerung der Luftzufuhr an die Steuereinheit des Motors weiter. Moderne Ottomotorenkonzepte, wie beispielsweise die Benzindirekteinspritzung, ermöglichen über weite Lastbereiche hinweg eine magere Betriebsweise, was mit einem Kraftstoffverbrauchsvorteil gegenüber stöchiometrischen Konzepten verbunden ist.

Die Einhaltung künftig in Europa, Nordamerika und Japan geltender gesetzlicher Abgasgrenzwerte für Fahrzeuge erfordert eine effektive Entfernung aller Schadstoffe aus dem Abgas. Die Schadgase Kohlenmonoxid und Kohlenwasserstoffe können aus dem mageren Abgas durch Oxidation an einem geeigneten Oxidationskatalysator leicht unschädlich gemacht werden. Zur Entfernung der Partikelemissionen sind Partikelfilter mit und ohne zusätzliche katalytisch aktive Beschichtung geeignete Aggregate. Die Reduktion der Stickoxide zu Stickstoff ist wegen des hohen Sauerstoffgehaltes im Abgas von mager betriebenen Verbrennungsmotoren schwieriger. Bekannte Verfahren beruhen entweder auf dem Einsatz von Stickoxid-Speicherkatalysatoren (NOₓ Storage Catalyst NSC) oder sind Verfahren zur selektiven katalytischen Reduktion (Selective Catalytic Reduktion SCR), meist mittels Ammoniak als Reduktionsmittel, an einem geeigneten Katalysator, kurz SCR-Katalysator.

Wie man leicht erkennt, müssen Abgasreinigungssysteme, welche den heutigen und zukünftigen Abgasnormen entsprechen sollen, aus mehreren Komponenten aufgebaut sein, um den anvisierten Grenzwerten genügen zu können. Hier stellt sich die zusätzliche Schwierigkeit ein, die einzelnen Komponenten der Abgasreinigungsanlage so zu regeln, dass ein optimales Endergebnis erreicht werden kann. Wichtig in diesem Zusammenhang ist der Fakt, dass die Abgasreinigungskomponenten häufig einen bevorzugten Temperaturbereich besitzen, in dem sie optimal aktiv sind. Bei zu niedrigen Temperaturen springt die katalytische Reinigung noch nicht an. Bei zu hohen Temperaturen des Abgases besteht die Gefahr der Schädigung des Katalysators.

Das Abgas von Fahrzeugen mit modernen Verbrennungsmotoren wird zunehmend kälter, da die Motoren auf geringeren Kraftstoffverbrauch hin optimiert werden. Die Abgasnachbehandlung mittels Katalysatoren wird dadurch immer schwieriger und kostspieliger. Die für eine effektive Abgasnachbehandlung notwendigen Temperaturen im Katalysator werden mitunter erst spät nach dem Kaltstart erreicht. Als Ausgleich müssen zur Erhöhung der Aktivität der Katalysatoren immer größere Mengen an Edelmetallen in den Katalysatoren eingesetzt werden oder die Katalysatoren müssen beheizt werden, um eine genügend hohe Aktivität aufzuweisen, was sich wiederum Nachteilig auf den Kraftstoffverbrauch auswirkt. Besonders niedrig sind die Abgastemperaturen bei überwiegend mager betriebenen Verbrennungsmotoren wie z.B. dem Dieselmotor und dem mager betriebenen Ottomotor mit Schichtbrennverfahren, da die im Überschuß vorhandene Luftmenge das Abgas zusätzlich kühlt. Aus diesem Grunde werden hier die Katalysatoren immer näher zum Motor hin eingebaut (motornah), damit möglichst wenig Wärmeverlust auftritt, wenn das Abgas vom Austritt aus dem Zylinder zum Katalysator hin strömt. Ferner werden in vielen Fällen die Abgasrohre zwischen dem Krümmer und dem Katalysator bereits thermisch isoliert.

Zusätzlich zum Warmlauf des Motors (Kaltstartbedingungen) treten niedrige Abgastemperaturen auch während des Fahrbetriebs häufiger auf. Dies ist dann der Fall, wenn der Motor keine positive Arbeit mehr verrichtet, z.B. wenn das Fahrzeug verzögert und der Motor im Schleppbetrieb betrieben wird. Hier wird die Ansaugluft zumeist ungedrosselt durch den Motor in den Abgasstrang geleitet und kühlt sowohl den Motor als auch das Abgasnachbehandlungssystem und die darin enthaltenen Katalysatoren weiter herunter.

In den Hochlastbereichen eines Ottomotors können demgegenüber durchaus Temperaturen von über 1000°C im motornahen Bereich des Abgasstranges erreicht werden. Es ist daher notwendig, insbesondere die in diesem Bereich befindlichen Katalysatoren vor zu hohen Temperaturen zu schützen.

Der Schutz von Autoabgaskatalysatoren vor zu hohen bzw. zu niedrigen Temperaturen ist dem Fachmann hinlänglich bekannt. So schlägt die EP 640757 vor, zum Zwecke des Überhitzungsschutzes bzw. bei Kaltstartbedingungen das Luft-Kraftstoffgemisch, welches dem Motor zur Verbrennung zugeführt wird, entsprechend zu kontrollieren.

Ebenfalls in der JP 2003193895 wird ein Verfahren beschrieben, wie insbesondere bei kälteren Abgasbedingungen abhängig von der Geschwindigkeit eine Kontrolle der Ansaugluft und des Zündzeitpunkts zum Schutz des Katalysators vor zu niedrigen Abgastemperaturen erfolgen kann. Bei mit Alkohol versetztem Benzin liegt die Verbrennungstemperatur niedriger als bei reinem Benzin. Hier ist es nochmals schwieriger, eine bestimmte Abgastemperatur aufrechtzuerhalten, um im optimalen Arbeitsbereich der Abgasreinigungskatalysatoren zu bleiben. Vorgeschlagen wird, die Abgastemperatur durch Anpassung des Zündzeitpunkts anzuheben. Ebenfalls anzuwenden wäre eine Kontrolle der Ansauglufttemperatur und des Abgasgegendrucks.

Um unter Kaltstartbedingungen eine möglichst zügige Erwärmung des Katalysators zu erreichen, schlägt die EP 2146071 vor, das Abgas an dem Turbolader vorbei direkt auf den Katalysator zu leiten, bis der Katalysator seine Arbeitstemperatur erreicht hat. Um Katalysatoren möglichst schnell auf Betriebstemperatur zu bringen, ist auch vorgeschlagen worden, diese durch externe Quellen zu erhitzen. Letzteres kann ebenfalls durch Einsatz von bestimmten Brennern im Abgasstrang erreicht werden (DE 102008007844).

In besonderen Fahrsituationen, in denen die Katalysatoren im Abgasstrang einer erhöhten Temperatur ausgesetzt sind, sollten diese vor zu hohen Temperaturspitzen geschützt werden. Strategien zur Abwendung von Schädigungen der Katalysatoren durch derart hohe Temperaturen sind beispielsweise in der DE 2409643 und in der DE 1451881 erwähnt. Letztere Schrift schlägt Umgehungsleitungen um den Katalysator vor.

Die EP957254A2 bezieht sich auf ein Abgassystem mit einer Umgehungsleitung des abstromseitig angeordneten Katalysators. Der motornah positionierte Katalysator wird immer vom Abgas durchströmt.

Die EP433772A2 beschreibt eine Umgehungsleitung um den motornah angeordneten Katalysator. Hier befindet sich im Nebenabgasstrang jedoch kein weiterer Katalysator.

Die Aufgabe der vorliegenden Erfindung besteht darin, ein Verfahren anzugeben, welches es gestattet, Katalysatorsysteme zur Reinigung von Abgasen vor Unterkühlung oder Überhitzung möglichst einfach, dafür aber nicht minder wirkungsvoll zu schützen.

Diese und weitere sich aus dem Stand der Technik in nahe liegender Weise ergebende Aufgaben werden durch ein Verfahren mit den Merkmalen des gegenständlichen Anspruchs 1 gelöst. Die von Anspruch 1 abhängigen Unteransprüche beziehen sich auf bevorzugte Ausgestaltungen des erfindungsgemäßen Verfahrens.

Dadurch, dass in einem Verfahren zur katalytischen Reinigung des Abgases von Verbrennungsmotoren durch ein Katalysatorsystem aufweisend einen Hauptabgasstrang (8) enthaltend zumindest einen motornah angeordneten ersten Katalysator (4) und einen Nebenabgasstrang (9) sowie eine Umschaltvorrichtung (7) zum Umschalten des Abgasstroms auf den Hauptabgasstrang und/oder den Nebenabgasstrang das Abgas über den Hauptabgasstrang (8) geleitet wird, wenn der Motor (1) positive Arbeit verrichtet und über den Nebenabgasstrang (9) geleitet wird, wenn der Motor keine positive Arbeit leistet, wobei das Abgas nur dann über den Nebenabgasstrang (9) geleitet wird, wenn eine bestimmte Abgastemperatur, die ≤ der Anspringtemperatur des Katalysators (4) liegt, unterschritten oder eine Abgastemperatur von 600°C überschritten wird und der Katalysator (4) im Hauptabgasstrang (8) ausgewählt ist aus der Gruppe aus TWC, DOC, NSC und im Nebenabgasstrang (9) ein weiterer Katalysator (5) angeordnet ist, der ausgewählt ist aus der Gruppe aus TWC, NSC, DOC, HC-Adsorber, gelangt man äußerst elegant, dafür aber nicht minder vorteilhaft zur Lösung der gestellten Aufgabe. Durch das erfindungsgemäße Verfahren wird verhindert, dass kaltes Abgas während z.B. des Schleppbetriebs des Motors den zumindest einen motornahen Katalysator weiter herunterkühlen kann. Gleichzeitig kann das Katalysatorsystem so auch vor einer zu starken Katalysatoralterung des zumindest einen im Hauptabgasstrang (8) befindlichen motornahen Katalysators (4) geschützt werden. Insbesondere direkteinspritzende Benzinmotoren werden bei höheren Lasten und Drehzahlen zumeist stöchiometrisch betrieben, auch wenn sie bei niedrigeren Lasten geschichtet betrieben werden können. Eine verstärkte Katalysatoralterung tritt hier bei erhöhten Temperaturen immer dann ein, wenn der Katalysator sauerstoffreichem Abgas ausgesetzt wird (siehe weiter unten). Dies ist dann der Fall, wenn der Motor plötzlich keine positive Arbeit mehr leisten muss (zum Beispiel während einer Verzögerung des Fahrzeuges im Schleppbetrieb nach erhöhtem Lastbetrieb). Auch hier kann das sauerstoffreiche Abgas über den Nebenabgasstrang (9) um den zumindest einen motornahen Katalysator (4) herumgeleitet werden. Er ist so erfindungsgemäß vor einer übermäßigen Alterung durch Sauerstoffbeladung bei erhöhter Temperatur geschützt.

Der mager betriebene Verbrennungsmotor leistet dann keine positive Arbeit mehr, wenn dem Motor kein Kraftstoff zugeführt wird, der Motor aber dennoch durch die Masse (träge oder schwere) des Fahrzeugs angetrieben mitdreht. Dies ist der Fall, wenn sich der Motor im so genannten Schleppbetrieb befindet. Ein solcher liegt beispielsweise vor, wenn eine Verzögerungsphase eintritt, z.B. durch Abbremsung - ggf. durch Motorbremse - des Fahrzeugs, d.h. die Geschwindigkeit des Fahrzeugs abnimmt und dem Motor kein Kraftstoff mehr zugeführt wird (Schubabschaltung). Der Motor ist in dieser Phase aber immer noch an das Getriebe angekoppelt, und es ist ein Gang eingelegt. Dabei wird gewöhnlich nur noch Luft über den Ansaugtrakt durch den sich drehenden Motor in die Abgasanlage gepumpt. Eine solche Betriebsweise erfolgt beispielsweise beim Annähern an eine rote Ampel oder beim schnellen Annähern an ein langsamer fahrendes Fahrzeug sowie beim Bergabfahren oder bei einem Bremsvorgang. Ferner kommt es auch während des Abkoppelns des Motors vom Getriebe kurzzeitig zur Abschaltung der Kraftstoffzufuhr zum Motor und dadurch zum Pumpen von Luft durch den Motor in den Abgasstrang, beispielsweise während eines Gangwechsels.

Das Vorbeileiten des Abgases an dem zumindest einen motornahen Katalysator (4) wird wie gesagt während einer Phase initiiert, in der der Motor keine positive Arbeit leistet, er also nicht mehr mit Kraftstoff versorgt wird (Schubabschaltung; fuel cut). Der genaue Zeitpunkt zur Schaltung der Umschaltvorrichtung (7) erfolgt vorzugsweise dann, wenn das Abgas, welches durch die Kraftstoffabschaltung bedingt mit Sauerstoff angereichert ist, den zumindest einen motornahen Katalysator zu erreichen droht. Das Umschalten der Umschaltvorrichtung (7) kann daher entweder erfolgen, sobald die Motorsteuerung erkennt, dass dem Motor kein Kraftstoff mehr zugeführt wird, der Motor sich aber trotzdem noch dreht und/oder wenn z.B. an dem Temperatursensor (15) eine starke Abnahme der Temperatur gemessen wird und/oder wenn z.B. die Lambda-Sonde (11) einen sehr hohen Sauerstoffanteil im Abgas detektiert. Zur Erkennung des Umschaltzeitpunktes kann weiterhin beispielsweise auch die Motordrehzahl gemeinsam mit der Kraftstoffzufuhr bzw. dem Pedalwert des Gaspedals herangezogen werden. Wichtig ist bei der Umschaltung, dass möglichst kein sauerstoffreiches Abgas den Katalysator (4) erreichen kann. Der Fachmann wird die durch Sensoren und der Motorsteuerung zur Verfügung stehenden Möglichkeiten zu einer erfindungsgemäßen Regelung der Umschaltvorrichtung (7) heranziehen.

Wie oben schon angedeutet dreht der Motor bei abgeschalteter Kraftstoffzufuhr im Schleppbetrieb weiter und pumpt so sauerstoffreiches Abgas in den Abgastrakt. Dies bedingt zum einen den Anstieg des Sauerstoffgehaltes des Abgases und zum anderen eine Absenkung der Temperatur, da naturgemäß die Ansaugluft der Umgebung entnommen worden ist und im Motor nur bedingt aufgewärmt wurde. Der Sauerstoffgehalt im Abgas ließe sich daher elegant über eine Lambdasonde (11) erfassen.

Bevorzugt ist es daher, die Umschaltung der Umschaltvorrichtung (7) über die Motorsteuerung zu regeln. Besonders bevorzugt ist es weiterhin, das Abgas nur dann zumindest teilweise über den Nebenabgasstrang (9) zu leiten, wenn eine bestimmte Abgastemperatur und/oder ein bestimmter Lambdawert im Abgas überschritten oder unterschritten wird.

Zusätzlich zu den eingangs schon angesprochenen niedrigen Abgastemperaturen während des Kaltstarts des Motors, gibt es - wie gesagt - Fahrsituationen, in denen sich das Abgas unter eine kritische Marke abkühlen kann. Dies ist der Fall, wenn der Motor keine positive Arbeit verrichtet, z.B. wenn das Fahrzeug verzögert und der Motor im Schleppbetrieb betrieben wird. In diesem Fall wird die Ansaugluft zumeist ungedrosselt durch den Motor in den Abgasstrang geleitet und kühlt sowohl den Motor als auch das Abgasnachbehandlungssystem und die darin enthaltenen Katalysatoren weiter herunter. Wenn die Abgastemperatur vor dem motornahen Katalysator (4) im Bereich der Anspringtemperatur (light-off Temperatur) des entsprechenden Katalysators oder darunter liegt, wird durch das erfindungsgemäße Verfahren verhindert, dass der Katalysator (4) im Hauptabgasstrang zu stark durch die kalte Luft vom Motor während des Schleppbetriebes abgekühlt wird. Je nach Katalysatorart und Alterungszustand des Katalysators liegt die Anspringtemperatur gewöhnlich zwischen 200°C und 350°C. Im Bereich unterhalb dieser Abgastemperatur von 350°C, bevorzugt unterhalb von 300°C, besonders bevorzugt unterhalb von 250°C wird das Verfahren also benutzt, um das Auskühlen der Katalysatoren zu verhindern und somit auch noch bei sehr niedrigen Abgastemperaturen, wie sie beispielsweise bei niedrigen Fahrzeuggeschwindigkeiten auftreten, eine höhere Reinigungswirkung der Katalysatoren sicherzustellen. Als Anspringtemperatur ist die Abgastemperatur gemeint, bei der ein Umsatz von 50% einer bestimmten Schadkomponente im Abgas über den entsprechenden Katalysator erzielt wird. Im vorliegenden Fall sind bevorzugt die Anspringtemperaturen der unverbrannten Kohlenwasserstoffe (HC) und Kohlenmonoxid (CO) im Abgas gemeint.

Wenn die Abgastemperatur im motornahen Katalysator (4) hingegen sehr hoch liegt, kann das erfindungsgemäße Verfahren dazu dienen, die thermische Schädigung des Katalysators zu verringern. Dies gilt besonders für Kraftfahrzeuge mit Benzinmotoren, da diese sehr hohe Abgastemperaturen von über 1000°C im motornahen Bereich aufweisen können. Das Abgas von Benzinmotoren ist üblicher Weise stöchiometrisch zusammengesetzt, was bedeutet, dass der Sauerstoffanteil des Abgases nach der Reaktion mit dem Katalysator nur noch sehr gering ist. Es ist aus der Literatur bekannt, dass vor allem edelmetallhaltige Katalysatoren einer besonders hohen Deaktivierung durch thermische Schädigung ausgesetzt sind, wenn sich Sauerstoff im Abgas befindet (Untersuchungen zur katalytischen Aktivität eines Diesel-DeNOx-Katalysators auf der Basis von Pt/AI2O3, Dissertation S. Eckhoff, 1998.; Journal of Catal. 109, 433-462 (1988). Ferner zeigt eine Untersuchung von C. Brinkmeier et. al. (Abgasnachbehandlung mit NOx-Speicherkatalysatoren für die strahlgeführte Benzindirekteinspritzung, Emission Control, Dresden 2006), dass NOx-Speicherkatalysatoren weitaus stärker geschädigt werden, wenn sauerstoffreiches Abgas bei hohen Abgastemperaturen von 830°C auf den Katalysator treffen, als wenn der Katalysator bei dieser Temperatur unter stöchiometrischen oder leicht fetten Abgaszusammensetzungen betrieben wird. Die Tatsache, dass sauerstoffhaltiges Abgas während des Schleppbetriebes des Motors bei hohen Abgastemperaturen (so genannter Schubabschaltungs- bzw. fuel cut-Betrieb) durch den Katalysator strömt, ist im Prinzip aus Fahrbarkeitsgründen nicht zu verhindern, da eine Androsselung der Ansaugluft das Fahrzeug zu stark abbremsen würde. Durch das erfindungsgemäße Verfahren wird das sauerstoffreiche Abgas jedoch am motornahen Katalysator (4) während des Schleppbetiebes des Motors bei hohen Temperaturen vorbeigeleitet, wodurch die Deaktivierung des Katalysators deutlich vermindert wird. Bevorzugt ist, das erfindungsgemäße Verfahren dann anzuwenden, wenn die Temperatur oberhalb der Abgastemperatur liegt, ab der der jeweilige Katalysator in Gegenwart von Sauerstoff eine hohe Deaktivierung erfährt. Bei Drei-Wege-Katalysatoren liegt dieser Wert oberhalb von etwa 800°C, bevorzugt oberhalb von 750°C und besonders bevorzugt oberhalb von 700°C, und bei NOx-Speicherkatalysatoren bei Werten oberhalb von 700°C, bevorzugt oberhalb von 650°C und besonders bevorzugt oberhalb von 600°C.

Wie schon angedeutet, besteht das vorliegende Katalysatorsystem wenigstens aus zumindest einem motornahen ersten Katalysator (4) im Hauptabgasstrang (8), einer Umschaltvorrichtung (7) und einem Nebenabgasstrang (9).

Als Katalysatoren, welche im gegenständlichen Verfahren motornah im Hauptabgasstrang (8) eingesetzt werden können, kommen alle die dem Fachmann für diesen Zweck bekannten Abgasreinigungskatalysatoren in Frage. Vorzugsweise werden die Katalysatoren im motornahen Bereich ausgewählt aus der Gruppe bestehend aus Drei-Wege-Katalysator (TWC), NOx-Speicherkatalysator (NSC), Oxidationskatalysator (DOC) eingesetzt, wobei diese sich ggf. als Beschichtung auf einem Partikelfilter befinden können (siehe auch DE 102010033688, EP1486248). Als motornahe Katalysatoren im Hauptabgasstrang (8) können auch mehrere hintereinander positionierte Katalysatoren zum Einsatz kommen. Besonders bevorzugt wird der motornahe erste Katalysator ausgewählt aus der Gruppe bestehend aus Drei-Wege-Katalysator und NOx-Speicherkatalysator eingesetzt bzw. aus einer Kombination dieser Katalysatoren in Reihe hintereinander angeordnet. Auch können diese katalytischen Beschichtungen, zum Beispiel als Zonierung auf einem Katalysator oder in Form von zwei Katalysatorschichten, die überainander angeordnet sein. Ganz besonders bevorzugt ist der Einsatz eines motornahen NOx-Speicherkatalysators.

In einer weiteren Ausgestaltung der Erfindung ist es bevorzugt, wenn der Hauptabgasstrang (8) und der Nebenabgasstrang (9) in einen gemeinsamen Abgasstrang (10) münden, in welchem mindestens ein weiterer Katalysator (6) angeordnet ist. Dieser ist maßgeblich für die Abgasreinigung verantwortlich, wenn das Abgas über den Nebenabgasstrang (9) geleitet wird. Aus diesem Grunde ist es sinnvoll, hier einen Katalysator zu verwenden, welcher einen hohen Umsatz von Schadkomponenten auch unter mageren Abgasbedingungen bewerkstelligen kann. Bevorzugte Katalysatoren, die an dieser Position eingesetzt werden können, sind zum Beispiel Oxidationskatalysatoren, NOx-Speicherkatalysatoren, Drei-Wege-Katalysatoren, SCR-Katalysatoren (SCR), N₂O-Zersetzungskatalysatoren und Kohlenwasserstoff-Speicherkatalysatoren (HC-Adsorber). Besonders bevorzugt ist der Einsatz von Drei-Wege- N₂O-Zersetzungs- und NOx-Speicherkatalysatoren. Ganz besonders bevorzugt ist der Einsatz eines Drei-Wege-Katalysators als Katalysator (6).

Ein weiterer Katalysator (5) wird im Nebenabgasstrang (9) eingesetzt. Katalysatoren an dieser Position sind erfindungsgemäß sauerstoffreichem Abgas ausgesetzt und sollten daher eine höhere Stabilität unter sauerstoffreichem Abgas aufweisen als der Katalysator (4) im Hauptabgasstrang. Katalysatoren, die an dieser Position eingesetzt werden können, sind Oxidationskatalysatoren, NOx-Speicherkatalysatoren, Drei-Wege-Katalysatoren, und Kohlenwasserstoff-Speicherkatalysatoren. Ganz besonders bevorzugt ist der Einsatz eines Oxidationskatalysators mit integrierter Kohlenwasserstoffspeicherfunktion.

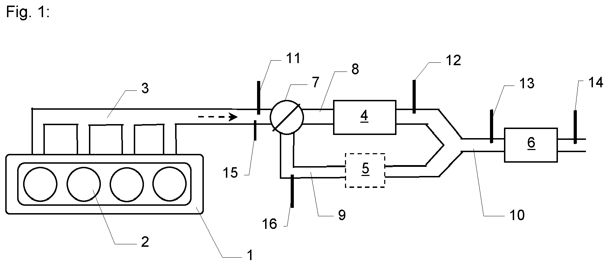

Die oben angesprochenen katalytisch aktiven Bestandteile sind vorzugsweise auf einem Substrat als Träger aufgebracht. Das Substrat kann dabei entweder aus einem herkömmlichen Kanalflussmonolithen, einem Tiefbettfilter oder aus einem Wandflussmonolithen mit Partikelfilterfunktion bestehen. Der Fachmann weiß, welche Substrate er in Anlehnung an die zu erfüllende Abgasreinigungsaufgabe heranzuziehen hat. Die unterschiedlichen Arten von Katalysatoren und Katalysatorbeschichtungen auf verschiedenartigen Trägersubstraten, die für eine erfindungsgemäße Anwendung an den drei zuvor genannten Positionen der Fig. 1 angegeben sind (Katalysator 4, 5 und 6) sind der DE102010033688, DE102010033689, EP1486248, WO11124357 einschließlich der darin genannten Verweise zu entnehmen.

In Fig. 1 ist ein Abgasnachbehandlungssystem schematisch dargestellt. Bei normalem Fahrbetrieb, bei dem der Motor positive Arbeit verrichten muss, wird das Abgas über das Ventil (7) in den Hauptabgasstrang (8) über den Katalysator (4) und (6) geleitet. Sobald der Motor im Schleppbetrieb betreiben wird und keine positive Arbeit mehr verrichtet, wird das Ventil (7) umgestellt und der kalte Abgasstrom wird in den Nebenabgasstrang (9) über den Katalysator (5) und den Katalysator (6) geleitet. Dadurch wird der Katalysator (4) im Hauptabgasstrang nicht so stark heruntergekühlt wie bei herkömmlichen Systemen, die keinen Nebenabgasstrang besitzen.

Des Weiteren wird dieses Verfahren angewendet, um den Katalysator (4) vor einer zu starken Katalysatoralterung zu schützen. Insbesondere mager verbrennende Ottomotoren werden bei höheren Lasten und Drehzahlen zumeist stöchiometrisch betrieben, auch wenn sie bei niedrigeren Lasten geschichtet betrieben werden können. Eine verstärkte Katalysatoralterung tritt bei erhöhten Temperaturen immer dann ein, wenn der Katalysator sauerstoffreichem Abgas ausgesetzt wird (fuel cut). Dies ist der Fall, wenn der Motor geschleppt wird (Verzögerung des Fahrzeuges) oder wenn z.B. Schaltvorgänge erfolgen. Um zu verhindern, dass bei höheren Temperaturen (von z.B. >600°C gemessen am Temperatur-Sensor (15)) der Katalysator (4) mit sauerstoffreichem Abgas durchströmt wird, wird wie oben beschrieben der Abgasstrom im Schleppbetrieb des Motors oder bei Schaltvorgängen kurzfristig über den Nebenabgasstrom (9) geleitet. Die Abgase werden weiterhin über dem Katalysator (5) und/oder dem Katalysator (6) gereinigt. Dies ermöglicht den Einsatz von Katalysatorbeschichtungen bei Katalysator (4), welche eine sehr hohe katalytische Aktivität bei niedrigen Abgastemperaturen besitzen aber eine weniger hohe thermische Stabilität aufweisen als herkömmliche Katalysatoren.

Unter motornah ist erfindungsgemäß ein Bereich von 10-120 cm vom Zylinderauslass, bevorzugt 20-100 cm besonders bevorzugt 20-80cm anzusehen.

Die hier beschriebene Betriebsweise eines Abgasreinigungssystems war dem Fachmann vor dem Prioritätsdatum nicht bekannt. Es ist mithin überraschend, dass eine wie hier dargestellte einfache Verfahrensweise es ermöglicht, Abgassysteme mit mehreren Katalysatoren durch eine erfindungsgemäße Regelung optimaler zu betreiben, so dass im Endeffekt eine bessere Reinigung der Abgase zu Buche schlägt. Die Vorteile des erfindungsgemäßen Verfahrens liegen auch darin, dass durch die geringe Schädigung der Katalysatoren weniger Edelmetall im Katalysator eingesetzt werden muss, was zu einer deutlichen Kosteneinsparung führt.

In Fig. 1 ist der Systemaufbau exemplarisch dargestellt.
1. Motor
2. Zylinder
3. Abgasanlage
4. Katalysator
5. Optionaler Katalysator
6. Katalysator
7. Umschaltvorrichtung wie z.B. Abgasklappe oder Abgasventil zum Umschalten des Abgasstroms auf den Hauptabgasstrang und/oder den Nebenabgasstrang
8. Hauptabgasstrang
9. Nebenabgasstrang
10. Gemeinsamer Abgasstrang
11. Lambda-Sensor und/oder NOx-Sensor
12. Lambda-Sensor und/oder NOx-Sensor
13. Lambda-Sensor und/oder NOx-Sensor
14. Lambda-Sensor und/oder NOx-Sensor
15. Temperatursensor
16. Lambda-Sensor und/oder NOx-Sensor

## Patentansprüche

1. Verfahren zur katalytischen Reinigung des Abgases von Verbrennungsmotoren durch ein Katalysatorsystem aufweisend einen Hauptabgasstrang (8) enthaltend zumindest einen motornah angeordneten ersten Katalysator (4) und einen Nebenabgasstrang (9) sowie eine Umschaltvorrichtung (7) zum Umschalten des Abgasstroms auf den Hauptabgasstrang und/oder den Nebenabgasstrang **dadurch gekennzeichnet, dass**
das Abgas über den Hauptabgasstrang (8) geleitet wird, wenn der Motor (1) positive Arbeit verrichtet und über den Nebenabgasstrang (9) geleitet wird, wenn der Motor keine positive Arbeit leistet, wobei das Abgas nur dann über den Nebenabgasstrang (9) geleitet wird, wenn eine bestimmte Abgastemperatur, die ≤ der Anspringtemperatur des Katalysators (4) liegt, unterschritten oder eine Abgastemperatur von 600°C überschritten wird und der Katalysator (4) im Hauptabgasstrang (8) ausgewählt ist aus der Gruppe aus TWC, DOC, NSC und im Nebenabgasstrang (9) ein weiterer Katalysator (5) angeordnet ist, der ausgewählt ist aus der Gruppe aus TWC, NSC, DOC, HC-Adsorber.

2. Verfahren nach einem oder mehreren der vorhergehenden Ansprüche,
**dadurch gekennzeichnet, dass**
der Hauptabgasstrang (8) und der Nebenabgasstrang (9) in einen gemeinsamen Abgasstrang (10) münden, in welchem mindestens ein weiterer Katalysator (6) angeordnet ist.

3. Verfahren nach Anspruch 3,
**dadurch gekennzeichnet, dass**
der Katalysator (6) im gemeinsamen Abgasstrang (10) ausgewählt aus der Gruppe aus TWC, DOC, NSC, SCR, N₂O-Zersetzungskatalysator, HC-Adsorber besteht.

## Claims

1. Method for catalytically purifying the exhaust gas of combustion engines by means of a catalyst system having a main exhaust tract (8) containing at least a first catalyst (4) arranged close to the engine and a secondary exhaust tract (9), as well as a switching device (7) for switching the exhaust gas stream to the main exhaust tract and/or the secondary exhaust tract,
**characterized in that**
the exhaust gas is guided through the main exhaust tract (8) when the engine (1) performs positive work and through the secondary exhaust tract (9) when the engine does not perform any positive work, wherein the exhaust gas is then conducted through the secondary exhaust tract (9) only if the exhaust gas temperature falls below a certain point, which is less than or equal to the light-off temperature of the catalyst (4), or exceeds 600 °C, and the catalyst (4) in the main exhaust tract (8) is selected from the group consisting of TWC's, DOC's, and NSC's, and, in the secondary exhaust tract (9), another catalyst (5) is arranged, which is selected from the group consisting of TWC's, NSC's, DOC's, and HC adsorbers.

2. Method according to one or more of the previous claims,
**characterized in that**
the main exhaust tract (8) and the secondary exhaust tract (9) merge into a common exhaust tract (10), in which at least one further catalyst (6) is arranged.

3. Method according to claim 3,
**characterized in that**
the catalyst (6) in the common exhaust tract (10) is selected from the group consisting of TWC's, DOC's, NSC's, SCR's, N₂O decomposition catalysts, and HC adsorbers.

## Revendications

1. Procédé de nettoyage catalytique des gaz d'échappement de moteurs à combustion interne par le biais d'un système de catalyseurs présentant une ligne de gaz d'échappement principale (8) contenant au moins un premier catalyseur (4) disposé à côté du moteur et une ligne de gaz d'échappement secondaire (9), ainsi qu'un dispositif de commutation (7) destiné à commuter le courant de gaz d'échappement vers la ligne de gaz d'échappement principale et/ou la ligne de gaz d'échappement secondaire
**caractérisé en ce que**
les gaz d'échappement sont dirigés vers la ligne de gaz d'échappement principale (8), lorsque le moteur (1) accomplit un travail positif et vers la ligne de gaz d'échappement secondaire (9) lorsque le moteur ne réalise aucun travail positif, dans lequel les gaz d'échappement ne sont dirigés vers la ligne de gaz d'échappement secondaire (9) que lorsqu'une température de gaz d'échappement déterminée, qui est ≤ à la température d'amorçage du catalyseur (4), n'est pas atteinte ou lorsqu'une température de gaz d'échappement de 600 °C est dépassée et le catalyseur (4) dans la ligne de gaz d'échappement principale (8) est choisi dans le groupe constitué de TWC, DOC, NSC et un autre catalyseur (5) est disposé dans la ligne de gaz d'échappement secondaire (9), choisi dans le groupe constitué d'adsorbant HC, DOC, NSC, TWC.

2. Procédé selon une ou plusieurs des revendications précédentes,
**caractérisé en ce que**
la ligne de gaz d'échappement principale (8) et la ligne de gaz d'échappement secondaire (9) débouchent dans une ligne de gaz d'échappement commune (10), dans laquelle au moins un autre catalyseur (6) est disposé.

3. Procédé selon la revendication 3,
**caractérisé en ce que**
le catalyseur (6) dans la ligne de gaz d'échappement commune (10) est choisi dans le groupe constitué de TWC, DOC, NSC, SCR, catalyseur de décomposition de N₂O, adsorbant HC.
